## Europäisches Patentamt
## European Patent Office
## Office européen des brevets

(11) Veröffentlichungsnummer: **0 039 793**
**B1**

(12) **EUROPÄISCHE PATENTSCHRIFT**

(45) Veröffentlichungstag der Patentschrift: **30.01.85**

(21) Anmeldenummer: **81102808.3**

(22) Anmeldetag: **13.04.81**

(51) Int. Cl.⁴: **G 01 N 27/83**

(54) **Verfahren und Anordnung zum Auswerten einer Fehlersignalspannung.**

(30) Priorität: **10.05.80 DE 3017979**

(43) Veröffentlichungstag der Anmeldung:
**18.11.81 Patentblatt 81/46**

(45) Bekanntmachung des Hinweises auf die
Patenterteilung:
**30.01.85 Patentblatt 85/05**

(84) Benannte Vertragsstaaten:
**FR GB SE**

(56) Entgegenhaltungen:
**FR-A-2 345 721**
**FR-A-2 350 600**
**FR-A-2 405 483**
**GB-A- 907 418**

(73) Patentinhaber: **Institut Dr. Friedrich Förster**
**Prüfgerätebau GmbH & Co. KG**
**Postfach 925 In Laisen 70**
**D-7410 Reutlingen 1 (DE)**

(72) Erfinder: **Schübel, Winfried**
**Weberstrasse 10**
**D-7430 Metzingen (DE)**

EP 0 039 793 B1

**Beschreibung**

Die Erfindung betrifft ein Verfahren zum Auswerten einer Fehlersignalspannung, die beim gleichförmigen Abtasten eines magnetisierten Prüfgutes mit einer magnetischen Streuflußsonde am Ort eines Fehlers in der letzteren entsteht, hinsichtlich der Lage des Fehlers in Bezug auf die Oberfläche des Prüfgutes. Die Erfindung betrifft ferner eine Anordnung zum Durchführen des Verfahrens.

Bei der magnetischen Streuflußfehlerprüfung ist neben dem Auffinden von Fehlern und der Ermittlung der Größe dieser Fehler häufig die Feststellung der Lage der Fehler in Bezug auf die Oberfläche ein wichtiges Problem. Die Verfahren der oben beschriebenen Art machen im allgemeinen von der Tatsache Gebrauch, daß Signale von Fehlern, die unterschiedliche Lagen in Bezug auf die Oberfläche des Prüfgutes aufweisen, also etwa die Signale von Außen- und Innenfehlern an Rohren, sich auch in ihren Frequenzspektren unterscheiden. So liegen z.B. die für das Signal eines Außenfehlers charakteristischen Frequenzen erheblich höher als es bei einem Innenfehler der Fall ist. Nach einem bekannten Verfahren, das in DE—A—2612697 beschrieben ist, geht man so vor, daß man die bei der Abtastung eines Rohres mit einer Streuflußsonde entstehenden Streuflußsignale in zwei Kanäle aufteilt, von denen der eine die Signale von Innen- und Außenfehlern gleich behandelt, während sie die andere, z.B. mit Hilfe eines zwischengeschalteten Hochpasses, entsprechend ihren unterschiedlichen Frequenzanteilen unterschiedlich wiedergibt. Anschließend speichert man die Signale der beiden Kanäle vorübergehend und trifft entsprechend der Amplituden der gespeicherten Signale die Entscheidung, ob es sich um einen Innen- oder einen Außenfehler handelt. Das kann geschehen, indem man den Quotienten der Signale beider Kanäle bildet, nachdem man zuvor die Verstärkung beider Kanäle so eingestellt hatte, daß ein Außenfehler aus beiden Kanälen mit gleich großer Signalamplitude hervorgeht, also den Quotienten "1" erbringt. Ein Innenfehler, der aufgrund seines niedrigeren Frequenzbereiches im Hochpaß abgeschwächt wird, erzielt einen von "1" unterscheidbaren kleineren Quotienten. Obwohl das beschriebene Verfahren sich in der Praxis in vielen Fällen bewährt hat, wird als nachteilig empfunden, daß neben der notwendigen Anpassung der beiden Kanäle aneinander auch für jedes neue Prüfproblem eine neue Einstellung des frequenzabhängigen Gliedes im zweiten Kanal, in der Regel eines Hochpasses, vorgenommen werden muß. Diese Einstellung ist nicht ganz einfach und erfordert auch bei hinreichender Erfahrung einen gewissen Zeitaufwand.

Die Erfindung stellt sich aufgrund dessen die Aufgabe, ein Verfahren und eine Anordnung zum Durchführen des Verfahrens zu finden, bei denen nur ein Prüfkanal nötig ist und die Einstellung eines frequenzabhängigen Gliedes entfällt.

Diese Aufgabe wird gelöst durch ein Verfahren, das gemäß Patentanspruch 1, und durch eine Anordnung, die gemäß Patentanspruch 7 ausgebildet ist.

Die erfindungsgemäße Lösung ermöglicht mit einfachen Mitteln eine von der Amplitude des Fehlersignals völlig unabhängige Auswertung der Frequenzinformation eines Fehlersignals. Das bisher erforderte frequenzabhängige Glied, zumeist ein Hochpaß, ist überflüssig geworden. Damit hat sich die Einstellung wesentlich vereinfacht. Dadurch daß man, in Weiterführung der erfindungsgemäßen Lösung, an n Stellen des Fehlersignals, die voneinander einen gleichförmigen zeitlichen Abstand aufweisen, Augenblickswerte der Signalspannung feststellt, gewinnt man in einfacher Weise die Mittel für die Bildung hinreichend angenäherter Werte für den maximalen Anstieg der Fehlersignalspannung und für die maximale Fehlersignalspannung. Nach anderen Weiterbildungen der Erfindung benutzt man als Startsignal für den Auswertevorgang das Überschreiten eines Schwellwertes durch die Fehlersignalspannung, wobei der genannte Schwellwert der ohnehin benötigte Schwellwert für den kleinsten noch zu berücksichtigenden Fehler sein kann. Um in jedem Falle auch die Vorderflanke des Fehlersignales noch voll ausnützen zu können, kann man nach einer anderen Weiterführung der Erfindung fortlaufend Augenblickswerte des Fehlersignales zwischenspeichern und diese zwischengespeicherten Augenblickswerte für die Bildung des Quotienten verwenden. Gewinnt man, nach einer weiteren vorteilhaften Ausgestaltung der Erfindung die Abstände $\Delta t$ zwischen den Feststellungen von Augenblickswerten aus einer Taktfrequenz, die von der Geschwindigkeit der Abtastung des Prüfgerätes abgeleitet ist, so ist man erstmals von dieser Abtastgeschwindigkeit, die von Fall zu Fall eine andere und betrieblichen Schwankungen unterworfen sein kann, völlig unabhängig.

Im folgenden wird die Erfindung mit Hilfe einiger Figuren an einem Ausführungsbeispiel näher erläutert. Es zeigen im einzelnen:

Figur 1 und 2 Graphische Darstellungen eines Fehlersignals

Figur 3 ein Ausführungsbeispiel einer erfindungsgemäßen Auswerteanordnung.

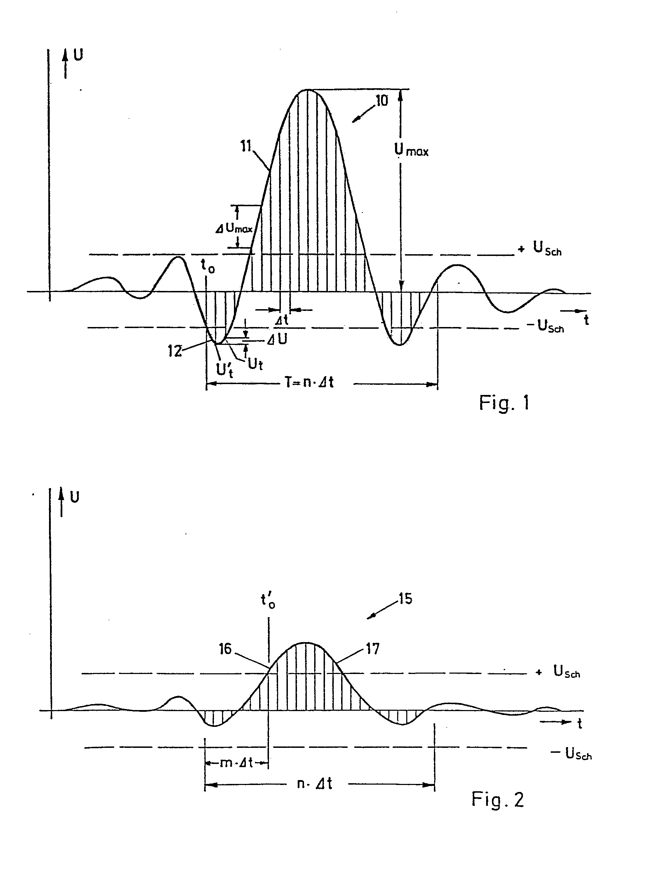

Figur 1 zeigt den zeitlichen Verlauf 10 der Signalspannung U eines Fehlers in einem magnetisierten Prüfteil, die beim Vorbeilauf einer Streuflußprüfsonde an diesem Fehler vom Streufluß des Fehlers in die Prüfsonde induziert wird. Die maximale Signalspannung $U_{max}$ steht in einem eindeutigen Zusammenhang mit der Größe des sie verursachenden Fehlers. Sie wird mit einer Schwellspannung verglichen, wenn es darum geht zu entscheiden, ob ein Fehler noch zugelassen werden soll oder nicht. Im vorliegenden Fall wird das Überschreiten der Schwellspannung $U_{sch}$, die für positive und negative Spannungen gleichermaßen gilt, zusätzlich dazu benutzt, den Auswertevorgang einzuleiten. Da der Auswertevorgang sich besonders einfach mit Digitalwerten durchführen läßt, ist im folgenden die Überführung des Fehlersignals 10 in Digitalwerte durch einen Analog/Digital-Wandler vorausgesetzt. Beim Überschreiten der Schwellspannung $U_{sch}$ zum Zeitpunkt $t_0$ wird damit begonnen, eine das Fehlersignal 10 übergreifende Auswerteperiode T in n gleiche Abschnitte $\Delta t$ zu unterteilen. Das geschieht, indem man den Analog/Digital-Wandler von einer festen Taktfrequenz $f_T$ mit der Periode $\Delta t$ steuern läßt. Nach jedem $\Delta t$ wird ein Augenblickswert $U_t$ festgestellt. Gleichzeitig wird eine Differenz $\Delta U = U_t - U'_t$ von $U_t$ und dem vorhergehenden Wert $U'_t$ gebildet. Aus den n festgestellten $U_t$-Werten wird der Maximalwert folgendermaßen ermittelt. Der Betrag jedes $U_t$ wird mit dem eines vorausgegangenen $U'_t$ verglichen. Dabei werden negative $U_t$ mit $(-1)$ multipliziert, was einer Gleichrichtung entspricht. Ist das vorausgegangene $U'_t$ dem Betrag nach größer als $U_t$, so wird $U'_t$ als Spitzenwert festgehalten und der nächste $U_t$-Wert wird mit dem festgehaltenen Spitzenwert $U'_t$ verglichen. Der nach Ablauf der n Abschnitte $\Delta t$ festgehaltene Spitzenwert wird als $U_{max.}$ genommen. In der gleichen Weise wird aus den n Differenzen $\Delta U$ der Maximalwert $\Delta U_{max.}$ ermittelt, der ein Maß für den angenäherten maximalen Anstieg der Fehlersignalspannung $(\Delta U/\Delta t)_{max.}$ darstellt, de alle $\Delta t$ voraussetzungsgemäß gleich groß sind. Die Güte der Annäherung von $(\Delta U/\Delta t)_{max.}$ und $U_{max.}$ an den wirklichen Maximalwert des Anstiegs der Fehlersignalspannung bzw. den wirklichen Maximalwert der Fehlersignalspannung selbst hängt von der gewählten Anzahl n der Abschnitte ab. In vielen Fällen dürfte die im vorliegenden Beispiel angenommenen Zahl n=25 bereits ausreichend groß sein. Von den beiden am Ende der Auswerteperiode T zur Verfügung stehenden Maximalwerten $\Delta U_{max.}$ und $U_{max.}$ wird ein Quotient

$$Q = \frac{\Delta U_{max.}}{U_{max.}}$$

gebildet. Mit ihm erhält man einen fehlerspezifischen Kennwert, der unabhängig von der Größe des Fehlersignals 10, also von der Größe des Fehlers und der Höhe der Verstärkung des der Prüfsonde nachgeschalteten Prüfkanals ist. Dagegen ist der Kennwert Q in der Lage, eine eindeutige Aussage über die Form des Fehlersignals, d.h. sein Frequenzspektrum, zu machen. Er ermöglicht es, die Lage des Fehlers in Bezug auf die Oberfläche zu beurteilen und insbesondere eine Entscheidung über die Frage "Innenfehler—Außenfehler" zu treffen. Zum Fällen dieser Entscheidung vergleicht man den ermittelten Quotienten Q mit einem Schwellwert, der zwischen den Q-Werten liegt, die man für Innenfehler und Außenfehler erhält. Überschreiten oder Nichtüberschreiten der Schwelle steht dann für Innenfehler bzw. Außenfehler. Als typischer Zahlenwert für das Verhältnis der Quotienten eines Innen- und eines Außenfehlers kann bei einer Wandstärke von ca. 10 mm das Verhältnis 1:4 gelten. Nimmt man an, daß die Induktion des Fehlersignals in eine Induktionssonde der Basisbreite 5 mm entlang einer Strecke S=10 mm stattfindet, so ergeben sich bei einer Abtastgeschwindigkeit von $V_a = 2$ m/sec. die folgenden praxisgerechten Werte:

Auswerteperiode

$$T = \frac{s}{V_a} = 5.10^{-3} \text{ sec.}$$

Auswerteabschnitte

$$\Delta t = \frac{T}{n} = 200 \mu \text{ sec.}$$

Taktfrequenz

$$f_T = \frac{1}{\Delta t} = 5 \text{ Khz}$$

Beim Fehlersignal 10 nach Figur 1 war die Schwellspannung $U_{sch}$ bereits von einem zeitlich vor der vorderen positiven Flanke 11 liegenden negativen Signalanteil 12 überschritten worden. Dadurch fällt die ganze vordere Flanke 11 mit in die Auswerteperiode T hinein. Liegt bei gleichbleibender Schwellspannung $U_{sch}$ ein kleineres Fehlersignal vor, etwa das Fehlersignal 15 nach Figur 2, so wird die Schwellspannung erst zu einem späteren Zeitpunkt $t'_0$ überschritten. Dieser liegt mitten in der vorderen Flanke 16 des Fehlersignals 15. Das bedeutet jedoch, daß für den Auswertevorgang nur noch die rückseitige Flanke 17 des Fehlersignals 15 zur Verfügung steht, da ja der Maximalwert des Anstiegs der vorderen Flanke 16 schon vor dem Zeitpunkt $t'_0$ vorgelegen haben kann. Insbesondere dann ist dies sehr unerwünscht, wenn die Fehlersignal unsymmetrisch sind. Um noch vor dem Zeitpunkt $t'_0$ liegende Augenblickswerte in die Auswertung einzubeziehen und auf diese Weise beide Flanken des Fehlersignals 15 auswerten zu können, nimmt man fortlaufend und mit den gleichen Abständen $\Delta t$ eine Zwischenspeicherung einer gewissen Anzahl von Augenblickswerten vor. Bei Beginn der Auswertung zum Zeitpunkt $t'_0$ greift man auf die zwischengespeicherten Augenblickswert zurück und beginnt die Auswertung mit einem Augenblickswert, der zu einem um die Zeitspanne $m.\Delta t$ vor $t'_0$ liegenden Zeitpunkt vorgelegen hat.

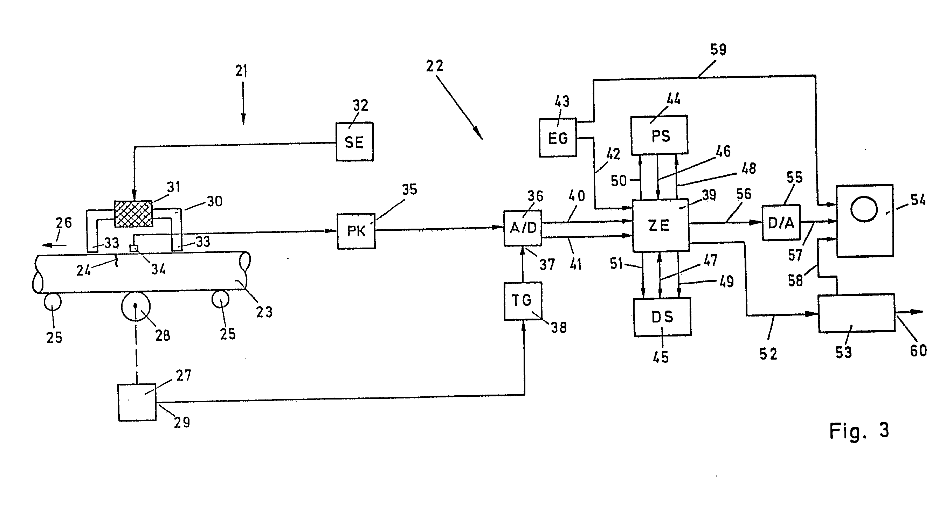

In Figur 3 ist eine herkömmliche Streuflußprüfeinrichtung 21 mit einem Ausführungsbeispiel einer erfindungsgemäßen Auswerteanordnung 22 dargestellt. Die Prüfeinrichtung 21 dient zur Prüfung von Rohren 23 auf quer zum Rohr verlaufende Fehler 24. Rohr 23 durchläuft die Prüfeinrichtung 21 auf einem Rollgang 25 in Richtung von Pfeil 26 mit der Geschwindigkeit $V_a$. Ein Geschwindigkeitsgeber 27 nimmt mit einem Reibrad 28 die Fortbewegung des Rohres 23 auf und gibt an seinem Ausgang 29 ein Signal ab, das der Geschwindigkeit $V_a$ des Rohres proportional ist. Ein Magnetjoch 30 mit einer Jochspule 31, die von einer Speiseeinheit 32 mit einem Magnetisierungsstrom gespeist wird, magnetisiert das Rohr 23 in Längsrichtung. Zwischen den Polschuhen 33 des Magnetjoches 30 befindet sich eine Streuflußsonde 34 und tastet das vorbeilaufende magnetisierte Rohr 23 auf magnetische Fehlerstreuflüsse ab. Statt des der Einfachheit halber dargestellten U-förmigen Joches 30 kann ein das Rohr 23 umfassendes Joch, statt der Einzelsonde 34 ein Kranz von Streuflußsonden benutzt werden, wenn der ganze Umfang des Rohres erfaßt werden soll. Die Signale der Streuflußsonde werden in einem Prüfkanal 35 verstärkt und in bekannter Weise vorbehandelt, z.B. durch einen Bandpaß, der die außerhalb des Frequenzbereiches der Fehlersignale liegenden Störsignale ausblendet. Vom Prüfkanal 35 gelangen die Fehlersignale zu einem Analog/Digital-Wandler 36, der die Eingangsstufe der Auswerteanordnung 22 bildet. Der Steuereingang 37 des Analog/Digital-Wandlers 36 ist an den Ausgang eines Taktgenerators 38, der Eingang des letzteren an den Ausgang 29 des Geschwindigkeitsgebers 27 angeschlossen. Für die Steuerung des Ablaufs der Auswertevorgänge ist eine Zentraleinheit 39 vorgesehen, die im vorliegenden Beispiel in einem Mikroprozessor besteht. Zentraleinheit 39 ist über ein Leitungsbündel 40 und eine Steuerleitung 41 mit dem Analog/Digital-Wandler 36, über Leitungen 42 mit einer Eingabeeinrichtung 43 verbunden, die u.a. Einsteller für die Schwellwerte aufweist. Der Zentraleinheit 39 ist ein Programmspeicher 44 und ein Datenspeicher 45 zugeordnet, von denen der erstere in einem sogenannten ROM (read only memory), der letztere in einem sogenannten RAM (random excess memory) bestehen kann. Der Programmspeicher 44 enthält alle notwendigen Programmelemente, während der Datenspeicher 45 für die Speicherung aller erforderlichen Daten, u.a. der Zwischenspeicherung von Augenblickswerten zur Verfügung steht. Die Leitungsbündel 46 bzw. 47 (Datenbus) dienen dem Datenfluß, Leitungsbündel 48 bzw. 49 (Adressbus) der Übermittlung der Adressen, Steuerleitungen 50 bzw. 51 (Steuerbus) der Übertragung der Steuersignale zwischen der Zentraleinheit 39 einerseits, den beiden Speichern 44 und 45 andererseits. Die gewonnenen Informationen gelangen über Leitungen 52 an eine Anzeigestation 53 und von deren Ausgang 60 an weitere externe Auswerteeinrichtungen wie Fehlerfarbmarkier- oder Sortiereinrichtungen. Zur visuellen Darstellung der Fehlersignale und der Fehlersignalschwellen ist zusätzlich über einen Digital/Analog-Wandler 55 und über Leitungen 56 und 57 an die Zentraleinheit 39 ein Sichtgerät 54 angeschlossen, das über weitere Leitungen 58 und 59 mit der Anzeigestation 53 bzw. der Eingabeeinrichtung 43 Verbindung hat.

Die Auswertung mit Hilfe der Anordnung nach Figur 3 kann in folgender Weise verlaufen. Im Geschwindigkeitsgeber 27 wird eine der Geschwindigkeit $V_a$ proportionale Spannung hergestellt. Taktgenerator 38 erzeugt in Abhängigkeit von dieser Spannung eine der Geschwindigkeit $V_a$ proportionale Frequenz $f_T$. Im Takt dieser Frequenz werden die dem Prüfkanal 35 entnommenen analogen Signale vom Analog/Digital-Wandler 36 in digitale Signale verwandelt und der Zentraleinheit 39 angeboten. Diese bezieht von der Eingabeeinheit 43 noch die folgenden weiteren Informationen: einen Schwellwert für große Fehler, einen Schwellwert für kleine Fehler, einen Schwellwert für den Start der Auswertevorgänge, der dem Schwellwert für kleine Fehler entsprechen kann sowie einen Schwellwert für den Quotienten Q zur Entscheidung der Frage "Innenfehler—Außenfehler". Auf ein Initialsignal hin läuft ein im Programmspeicher 44 gespeichertes einfaches Programm ab, mit dessen Hilfe die zuvor beschriebenen Auswerteschritte vollzogen werden. Die in Anzeigestation 53 ausgegebenen Informationen können in Lampensignalen mit folgendem Inhalt bestehen:

    "großer Außenfehler"
    "kleiner Außenfehler"
    "großer Innenfehler"
    "kleiner Innenfehler"
    "kein Fehler".

Im Sichtgerät 54 kann neben der Darstellung des Fehlersignals und der Fehlersignalschwellen eine Angabe über die Lage des Fehlers vermittelt werden.

Diese kann in einfachen Zeichen für die Aussage "Innenfehler—Außenfehler" bestehen, z.B. in einem nach oben bzw. nach unten gerichteten Impulszacken an der jeweiligen Fehlersignalschwelle, die als horizontale Linie in der Höhe der in der Eingabeeinheit 43 vorgewählten Fehlersignalschwellspannung am Bildschirm des Sichtgerätes 54 sichtbar sein kann.

Bei der Einstellung des Schwellwertes für den Quotienten Q geht man so vor: Man stellt bei zwei Musterfehlern, von denen der eine ein Innenfehler, der andere ein Außenfehler ist, die Schwelle erst so ein, daß beide Musterfehler soeben noch als Außenfehler gewertet werden, dann so, daß beide noch als Innenfehler gewertet werden. Die beiden Einstellungen merkt man sich, bildet einen dazwischen gelegenen Mittelwert und stellt die Schwelle auf diesen Mittelwert ein.

## Patentansprüche

1. Verfahren zur Unterscheidung von auf gegenüberliegenden Seiten einer Wandung eines magnetisierten Prüfgutes auftretenden Fehlern durch Auswerten einer Fehlersignalspannung, die beim gleichförmigen Abtasten einer Seite der Wandung des Prüfgutes mit einer magnetischen Streuflußsonde am Ort eines Fehlers in der Streuflußsonde entsteht, dadurch gekennzeichnet, daß man zumindest näherungsweise den Betrag des maximalen zeitlichen Anstieges der Fehlersignalspannung und den Betrag der maximalen Fehlersignalspannung ermittelt, den Quotienten Q der beiden Beträge bildet und den letzteren als Fehlerkennwert benutzt.

2. Verfahren nach Anspruch 1, dadurch gekennzeichnet, daß man an n Stellen der Fehlersignalspannung, die voneinander den gleichen zeitlichen Abstand $\Delta t$ aufweisen, Augenblickswerte der Signalspannung feststellt, jeweils von zwei benachbarten Augenblickswerten die Differenz bildet und sowohl die größte Differenz als auch den größten Augenblockswert ermittelt.

3. Verfahren nach Anspruch 2, dadurch gekennzeichnet, daß man mit der Feststellung der n Augenblickswerte für die Bildung der Differenz sowie des Quotienten zu einem Zeitpunkt $t_o$ beginnt, bei dem die Fehlersignalspannung einen Schwellwert überschreitet.

4. Verfahren nach Anspruch 3, dadurch gekennzeichnet, daß der genannte Schwellwert gleichzeitig der Schwellwert für den kleinsten auszuwertenden Fehler ist.

5. Verfahren nach Anspruch 3 oder 4, dadurch gekennzeichnet, daß man fortlaufend eine Anzahl von Augenblickswerten im festen zeitlichen Abstand $\Delta t$ zwischenspeichert und nach Überschreiten des genannten Schwellwertes beim Zeitpunkt $t_o$ zur Feststellung der n Augenblickswerte sich der zwischengespeicherten Augenblickswerte bedient, wobei man mit einem Augenblickswert beginnt, der eine Anzahl m von Abständen $\Delta t$ vor dem Zeitpunkt $t_o$ liegt.

6. Verfahren nach einem der Ansprüche 2 bis 5, dadurch gekennzeichnet, daß man die Abstände $\Delta t$ durch eine Taktfrequenz $f_T$ steuern läßt, die von der Abtastgeschwindigkeit $V_a$ des Prüfgutes abgeleitet ist.

7. Anordnung zur Durchführung des Verfahrens nach Anspruch 1, gekennzeichnet durch einen Analog/Digital-Wandler (36), an dessen Signaleingang die aus der Streuflußsonde (34) herrührende Fehlersignalspannung angeschlossen ist, einen Taktgenerator (38), der mit dem Steuereingang (37) des Analog/Digital-Wandlers (36) verbunden ist und diesem Taktsignale zum Herstellen von Augenblickswerten der Fehlersignalspannnung entsprechenden Digitalwerten gibt, eine zentrale Recheneinheit (39), die zur Bildung des Quotienten Q aus dem Betrag des maximalen zeitlichen Anstiegs der Fehlersignalspannung und dem Betrag der maximalen Fehlersignalspannung mit dem Ausgang des Digital/Analog-Wandlers (36) verbunden ist und der periphere Einheiten zugeordnet sind, nämlich ein oder mehrere Speichereinheiten (44, 45), Eingabeeinheiten (43) und Ausgabeeinheiten (53, 54, 55).

8. Anordnung nach Anspruch 7, dadurch gekennzeichnet, daß dem Taktgenerator (38) ein Geber (27) vorgeschaltet ist, der ein der Abtagstgeschwindigkeit $V_a$ proportionales Signal entwickelt und mit diesem die Taktfrequenz $f_T$ des Taktgenerators (38) steuert.

9. Anordnung nach Anspruch 7 oder 8, dadurch gekennzeichnet, daß bei den Eingabeeinheiten (43) neben solchen zur Eingabe von Schwellwerten für die Fehlersignalspannung auch eine Eingabeeinheit für die Eingabe eines Schwellwertes für den genannten Quotienten Q vorgesehen ist und daß sich unter den Ausgabeeinheiten (53, 54) mindestens eine zur Anzeige des Überschreitens des zuletztgenannten Schwellwertes befindet.

10. Anordnung nach einem der Ansprüche 7—9, dadurch gekennzeichnet, daß einer der vorgesehenen Speicher (45) auch zur Zwischenspeicherung von Augeblickswerten der Fehlersignalspannung benutzt wird, die bereits vor dem Zeitpunkt $t_o$ des Überschreitens einer Schwellspannung $U_{sch}$ gewonnen wurden.

## Revendications

1. Procédé permettant de distinguer des défauts situés sur les côtés opposés de la paroi d'une pièce aimantée soumise à un essai, par l'interprétation d'un signal de défaut, associé à une tension, qui, au cours de l'exploration uniforme, au moyen d'une sonde magnétique à flux dispersé, de l'un des côtés de la paroi de la pièce soumise à l'essai, se produit à l'emplacement où se trouve un défaut, caractérisé en ce que l'on détermine, au moins approximativement, la valeur de l'accroissement maximal, rapporté au temps, de la tension associée au signal de défaut et la valeur de la tension maximale associée au défaut, en ce que l'on calcule le quotient Q de ces deux valeurs et en ce que l'on utilise de quotient comme valeur caractéristique du défaut.

2. Procédé selon la revendication 1, caractérisé en ce que n points de mesure de la tension associée au signal de défaut qui sont séparés les uns des autres par un même intervalle de temps $\Delta t$, on détermine les valeurs instantanées de la tension associée au défaut, en ce que l'on calcule chaque fois la différence entre deux valeurs instantanées voisines et en ce que l'on détermine la plus grande différence et la plus grande valeur instantanée.

3. Procédé selon la revendication 2, caractérisé en ce que l'on commence à déterminer les n valeurs instantanées, pour le calcul de la différence ou du quotient, à un instant $t_o$ où la tension associée au signal dépasse une valeur de seuil.

4. Procédé selon la revendication 3, caractérisé en ce que la valeur de seuil en question est en même temps la valeur de seuil correspondant au plus petit défaut à interpréter.

5. Procédé selon l'une des revendications 3 ou 4, caractérisé en ce que l'on effectue constamment la mémorisation intermédiaire d'un certain nombre de valeurs instantanées séparées par un intervalle de temps fixe $\Delta t$ et qu'après dépassement de la valeur de seuil mentionnée au temps $t_o$ on utilise, pour la détermination des n valeurs instantanées, les valeurs instantanées conservées par mémorisation intermédiaire à un certain nombre d'intervalles $\Delta T$ en avant du temps to.

6. Procédé selon l'une des revendications 2 à 5, caractérisé en ce que l'on fait commander les intervalles $\Delta t$ par une fréquence d'horloge $f_T$ qui dépend de la vitesse d'exploration $V_a$ de la pièce soumise à l'essai.

7. Dispositif pour l'application du procédé selon la revendication 1, caractérisé en ce qu'il comprend un convertisseur numérique/analogique (36) dont l'entrée de signal est reliée à la tension associée au signal de défaut provenant de la sonde à flux de dispersion (34), un rythmeur (38) qui est relié à l'entrée de commande (37) du convertisseur numérique/analogique (36) auquel il envoie des signaux d'horloge pour la génération de valeurs instantanées des valeurs numériques correspondant à la tension associée au signal de défaut, une unité de calcul centrale (39) qui, pour assurer le calcul du quotient Q de la valeur maximale de l'accroissement rapporté au temps, de la tension associée au signal de défaut et de la valeur maximale de la tension associée au signal de défaut, est reliée à la sortie du convertisseur numérique/analogique (36) et à laquelle sont associées des unités périphériques, notamment une ou plusieurs mémoires (44, 45) des unités d'entrée (43) et des unités de sortie (53, 54, 55).

8. Dispositif selon la revendication 7, caractérisé en ce qu'il comprend, en avant du rythmeur (38), un organe d'émission (27) qui produit un signal proportionnel à la vitesse d'exploration $V_a$ et, de ce fait, commande la fréquence d'horloge $f_T$ du rythmeur (38).

9. Dispositif selon l'une des revendications 7 ou 8, caractérisé en ce qu'il comprend, parmi les unités d'entrée (43) à côté de celles qui permettent l'entrée des valeurs de seuil correspondant à la tension associée au signal de défaut, également une unité permettant l'entrée d'une valeur de seuil correspondant au quotient Q déjà mentionné et, parmi les unités de sortie (53, 54) au moins une unité signalant le dépassement de la valeur de seuil mentionnée en dernier lieu.

10. Dispositif selon l'une des revendications 7 à 9, caractérisé en ce que l'une des mémoires (45) est utilisée également pour la mémorisation intermédiaire des valeurs instantanées de la tension associée au signal de défaut qui sont obtenues avant le temps $t_o$ correspondant au dépassement d'une tension de seuil $U_{sch}$.

**Claims**

1. A process for distinguishing defects which occur on opposite sides of a wall of a magnetised test item by evaluation of a defect signal voltage which occurs upon uniform scanning of one side of the wall of the test item with a magnetic leakage flux probe, at the location of a defect, in the leakage flux probe, characterised by at least approximately determining the amount of the maximum rise in respect of time of the defect signal voltage and the amount of the maximum defect signal voltage, forming the quotient Q of the two amounts, and using the quotient as a defect characteristic value.

2. A process according to claim 1 characterised in that instantaneous values of the signal voltage are determined at n locations of the defect signal voltage, which are at the same spacing $\Delta t$ from each other in respect of time, the difference between two respective adjacent instantaneous values is formed, and both the greatest difference and the greatest instantaneous value are ascertained.

3. A process according to claim 2 characterised in that the operation of determining the n instantaneous values for forming the difference and the quotient is begun at a time $t_o$ at which the defect signal voltage exceeds a threshold value.

4. A process according to claim 3 characterised in that said threshold value is at the same time the threshold value in respect of the smallest defect to be evaluated.

5. A process according to claim 3 or claim 4 characterised in that a number of instantaneous values at the fixed spacing $\Delta t$ in respect of time are continuously put into intermediate storage and use is made of the instantaneous values in intermediate storage, after said threshold value is exceeded, at time $t_o$, for the purposes of establishing the n instantaneous values, wherein operation begins with an instantaneous value which is a number m of spacings $\Delta t$ prior to the time $t_o$.

6. A process according to one of claims 2 to 5 characterised in that the spacings $\Delta t$ are controlled by a clock frequency $f_T$ which is derived from the test item scanning speed $V_a$.

7. An arrangement for carrying out the process according to claim 1 characterised by an analog-digital converter (36) having a signal input to which is connected the defect signal voltage from the leakage flux probe (34), a clock generator (38) which is connected to the control input (37) of the analog-digital converter (36) and which feeds same with clock signals for producing digital values corresponding to instantaneous values of the defect signal voltage, a central processing unit (39) which, for the purposes of forming the quotient Q from the amount of the maximum rise in respect of time of the defect signal voltage and the amount of the maximum defect signal voltage, is connected to the output of the digital-analog converter (36) and with which there are associated peripheral units, namely one or more memory units (44, 45), input units (43) and output units (53, 54, 55).

8. An arrangement according to claim 7 characterised in that connected on the input side of the clock generator (38) is a generator (27) which produces a signal proportional to the scanning speed $V_a$ and therewith controls the clock frequency $f_T$ of the clock generator (38).

9. An arrangement according to claim 7 or claim 8 characterised in that in regard to the input units (43), besides such units for the input of threshold values for the defect signal voltage, there is also an input unit for the input of a threshold value for said quotient Q, and that among the output units (53, 54) there is at least one output unit for displaying when the last-mentioned threshold value is exceeded.

10. An arrangement according to one of claims 7 to 9 characterised in that one of the memory means (45) provided is also used for intermediate storage of instantaneous values of the defect signal voltage, which were already produced prior to the time $t_o$ at which a threshold voltage $U_{sch}$ is exceeded.

Fig. 1

Fig. 2

1

Fig. 3